# EUROPÄISCHE PATENTSCHRIFT

(11) **EP 3 265 345 B1**
(45) Veröffentlichungstag und Bekanntmachung des Hinweises auf die Patenterteilung: **02.10.2019**
(21) Anmeldenummer: 16711785.2
(22) Anmeldetag: 03.03.2016
(51) Int. Cl.: B60R 25/24

(54) **INTELLIGENTER ELEKTRONISCHER SCHLÜSSEL MIT MOBILFUNK-FÄHIGKEIT**
INTELLIGENT ELECTROIC KEY USING MOBILE COMMUNICATION
CLÉ ÉLECTRONIQUE INTELLIGENTE CAPABLE DE TÉLÉCOMMUNICATION MOBILE

(30) Priorität: 05.03.2015 DE 102015203954
(43) Veröffentlichungstag der Anmeldung: 10.01.2018
(73) Patentinhaber: Volkswagen Aktiengesellschaft, 38440 Wolfsburg (DE)
(72) Erfinder: MEIERLING, Klaus, 44879 Bochum (DE); THEIMER, Wolfgang, 44879 Bochum (DE)
(86) Internationale Anmeldenummer: PCT/EP2016/054534
(87) Internationale Veröffentlichungsnummer: WO 2016/139301

(56) Entgegenhaltungen:
- EP-A1- 2 808 204
- EP-A2- 0 846 822
- EP-A2- 1 376 930
- CN-U- 204 065 692
- DE-A1-102005 062 332
- DE-A1-102012 012 389
- DE-A1-102012 013 450
- DE-A1-102012 203 535
- US-A1- 2005 215 286
- US-A1- 2014 139 331

## Beschreibung

Die Erfindung betrifft das Gebiet der Schlüssel, insbesondere einen elektronischen Schlüssel. Üblicherweise werden heute mechanische Schlüssel verwendet, die in ein Schloss eingeführt werden, um Zugang zu einem Ort oder einem Gerät zu erlangen. Die Sicherheit eines physischen Schlüssels beruht auf der Einmaligkeit des Schlüssels, d.h. eine Duplizierung ist zumindest schwierig. Schlüssel, die häufig benutzt werden, wie beispielsweise Haustürschlüssel oder Fahrzeugschlüssel, werden in der Regel ständig mit sich getragen.

Es sind auch elektronische Schlüssel bekannt, auf die ein Zugangscode gespeichert ist und die in ein Lesegerät eingeführt werden oder eine drahtlose Verbindung mit einem Schloss aufnehmen, das den Zugangscode ausliest und mit einem gespeicherten Zugangscode vergleicht. Elektronische Schlüssel sind flexibel, da der Zugangscode in Schlüssel und Schloss verändert werden kann, was beispielsweise eine zeitliche Begrenzung der Nutzung eines Schlüssels ermöglicht. Auch können Nutzergruppen verwaltet werden, entweder lokal im Schloss, oder zentral auf einem mit dem Schloss verbundenen Server.

Auch im Automobilbereich haben elektronische Schlüssel eine Verbreitung gefunden. Die bekannten elektronischen Schlüssel beschränken sich jedoch auf Kurzstreckenfunk und sind in ihrer Funktion begrenzt.

Die DE102012012389A offenbart einen Schlüssel nach dem Oberbegriff des Anspruchs 1. Aus der europäischen Patentschrift EP 2 337 311 A1 ist bereits bekannt, Mobiltelefone als Mittel zur Authentifizierung am Fahrzeug, d.h. als Fahrzeugschlüssel zu verwenden. Bei der Verwendung einer offenen Mobiltelefonplattform ist Sicherheit jedoch nur schwierig zu erzielen und ein Nachbauen von Hardware und Rechten ist mit technischem Wissen leicht möglich. Aus der deutschen Offenlegungsschrift DE 10 2010 041 093 A1 ist ein System zum Fernsteuern von Fahrzeugkomponenten mittels eines entfernten Endgeräts eines Mobilfunknetzes bekannt. Das System hat allerdings den Nachteil, dass zwischen Endgerät und den fernzusteuernden Fahrzeugkomponenten keine Kurzstreckenfunkverbindung vorgesehen ist, so dass die Verbindung immer über das Mobilfunknetz erfolgen muss.

Aus der deutschen Offenlegungsschrift DE 10 2009 029 748 A1 ist ferner ein Identifikationsmodul bekannt, das die Bewegung eines Fahrzeugs mittels Sensoren überwacht und mittels eines Mobilfunkkommunikationsmoduls nach einem Ereignis wie einem Unfall oder einem Diebstahlversuch eine Instanz wie beispielsweise eine Notrufzentrale über das Ereignis benachrichtigen kann. Das Identifikationsmodul ist allerdings fest im Fahrzeug verbaut und wird nicht aktiv vom Benutzer des Fahrzeugs verwendet.

Aufgabe der vorliegenden Erfindung ist es, einen elektronischen Schlüssel bereitzustellen bzw. ein entsprechendes Schlüsselsystem bereitzustellen, das die oben genannten Nachteile wenigstens teilweise überwindet.

Diese Aufgabe wird durch den erfindungsgemäßen elektronischen Schlüssel nach Anspruch 1 und dem Authentifizierungssystem nach Anspruch 8 und dem Verfahren nach Anspruch 13 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Ein erfindungsgemäßer elektronischer Schlüssel für ein Kraftfahrzeug umfasst eine Mobilfunkeinheit, die es dem elektronischen Schlüssel ermöglicht, über ein Mobilfunknetz Authentifizierungsinformationen von einem zentralen Server zu empfangen, eine Verarbeitungseinheit aufweist, welche dazu eingerichtet ist, von dem zentralen Server empfangene Authentifizierungsinformationen zu verarbeiten, eine Speichereinheit, die dazu eingerichtet ist, von dem zentralen Server empfangene Authentifizierungsinformationen zu speichern, sowie eine Kurzstreckenfunkeinheit, die es dem elektronischen Schlüssel ermöglicht, Authentifizierungsinformationen an das Kraftfahrzeug zu senden, um ein Schloss oder eine Funktion einer Vorrichtung zu entsperren.

Der elektronische Schlüssel kann beispielsweise den Zugang zu einer Einrichtung, beispielsweise zu einem Fahrzeug, einem Raum, oder der Funktion eines Geräts ermöglichen. Bei dem erfindungsgemäßen elektronischen Schlüssel kann es sich um einen intelligenten elektronischen Schlüssel mit Mobilfunk-Fähigkeit handeln, der mittels der Kurzstreckenfunkeinheit über eine lokale Konnektivität verfügt, etwas aufzusperren bzw. zu entsperren, beispielsweise eine Tür oder die Funktion einer Vorrichtung.

Mittels der Mobilfunkeinheit kann der elektronische Schlüssel beispielsweise mit einem oder mehreren Servern über eine weitreichende Mobilfunk-Verbindung und das Internet kommunizieren. Über das Mobilfunkmodul kann der elektronische Schlüssel beispielsweise Kontakt zu Servern im Internet und mit anderen Mobilfunkmodulen (z.B. Onboard-Units im Auto) aufnehmen. Die weitreichende Mobilfunk-Verbindung kann dabei vielfältigen Zwecken dienen, wie sie unten genauer beschrieben werden.

Die Verarbeitungseinheit kann beispielsweise dazu eingerichtet sein, vom Server Authentifizierungsinformationen entgegenzunehmen und in der Speichereinheit abzuspeichern, und/oder in der Speichereinheit abgespeicherte Authentifizierungsinformationen auf Grundlage von vom zentralen Server empfangenen Informationen zu ändern oder zu löschen. So können Zugangsdaten zur Authentifizierung empfangen, verändert oder entfernt werden.

Die Verarbeitungseinheit kann ferner dazu eingerichtet sein, Informationen über die Mobilfunkeinheit zu versenden, welche die Verwendung des elektronischen Schlüssels als Zahlungsgerät, als Pager, als universelle Fernsteuerung, als Überwachungsgerät, und/oder als Notrufgerät betreffen. So kann der elektronische Schlüssel beispielsweise als Zahlungsvorrichtung verwendet werden, da er mit einer kabellosen Infrastruktur verbunden ist.

Der elektronische Schlüssel kann ferner als Pager verwendet werden. Beispielsweise kann der elektronische Schlüssel Informationen vom Fahrzeug über die lokale Verbindung oder über die Mobilfunkverbindung zu einer im Fahrzeug eingebauten Mobilfunkeinheit empfangen und sie dem Nutzer anzeigen. Bei den Informationen kann es sich beispielsweise um Fahrzeugparameter wie der Ladezustand einer Hochvolt-Batterie handeln.

Der Schlüssel kann mittels der Mobilfunkeinheit so auch zu einer universellen Fernbedienung werden, die nicht auf die örtliche Nähe des Fahrzeugs beschränkt ist. Beispielsweise kann so ein sicheres ferngesteuertes Aufschließen des Fahrzeugs ermöglicht werden.

Der Nutzer kann demnach Steuerungsinformationen an das Fahrzeug senden und zwar sowohl über die lokale Verbindung mittels der Kurzstreckenfunkeinheit als auch über die Mobilfunkverbindung mittels der Mobilfunkeinheit.

Bevorzugt weist der elektronische Schlüssel ferner einen integrierten GPS-Empfänger auf. So kann der elektronische Schlüssel auch als persönliches Notrufgerät genutzt werden, das im Notfall die Position des Nutzers übermittelt.

Weiter bevorzugt verfügt der Schlüssel über ein Display und ein Eingabefeld wie etwa Knöpfe und ein Touchscreen oder ein Touchpad. So kann der elektronische Schlüssel für seinen Benutzer als Informationsgerät dienen.

Die Mobilfunkeinheit des elektronischen Schlüssels ist so eingerichtet, dass sie nur mit einem oder mehreren als vertrauenswürdig eingestuften Server kommunizieren kann. Damit weist der elektronische Schlüssel eine hohe Sicherheit auf.

Besonders bevorzugt weist der elektronische Schlüssel eine Betriebssystem-Software auf, die geschlossen ist. Eine geschlossene Betriebssystem-Software, bei der beispielsweise eine Installation von Applikationen nicht möglich ist, erhöht die Sicherheit. Heutige Betriebssysteme für Mobiltelefone erlauben die Installation von Drittapplikationen und es besteht die große Gefahr, dass Schad-Software sicherheitsrelevante Informationen ausliest. Aufgrund einer einfacheren und zielgerichteten Architektur ist der erfindungsgemäße elektronische Schlüssel weniger anfällig für einen Missbrauch seiner Funktionen durch Dritte. Ein erfindungsgemäßer elektronischer Schlüssel ohne Softwarenachrüstung ist deutlich einfacher sicher zu machen. Der elektronische Schlüssel kann ferner auch so genutzt werden, dass persönliche Daten in der Speichereinheit abgespeichert werden. Bei den gespeicherten Daten kann es sich um ein persönliches Profil des Benutzers handeln. Alternativ können aber auch Fahrzeugdaten gespeichert werden.

Der elektronische Schlüssel kann den Form-Faktor eines Schlüssels aufweisen. So kann man sich den elektronischen Schlüssel auch als einen Zwei-Wege-Pager im Form eines Schlüssels vorstellen.

Ferner kann der elektronische Schlüssel auch einen oder mehrere Sensoren wie einen Beschleunigungssensor, ein Magnetometer und/oder einen Gyrosensor aufweisen. Die Verarbeitungseinheit kann in diesem Fall dazu eingerichtet sein, anhand erfasster Sensordaten eine Geste zu erkennen, welche zur der Entsperrung führt.

Der erfindungsgemäße elektronische Schlüssel kann damit ein minimalistisches und kompaktes Kommunikationsgerät sein, mit dem man mit einem Fahrzeug interagieren kann, Zutritt zu Räumen erlangen oder personalisierte Transaktionen durchführen kann, wie etwa das Bezahlen einer Parkgarage.

Durch das Ergänzen eines Mobilfunkmoduls in einem Funkschlüssel ist es möglich, die sichere Funktionalität des Schlüssels auch bei großem Abstand zum Schloss (des Autos, der Räumlichkeiten) zu nutzen.

Die vorliegende Erfindung betrifft auch ein Authentifizierungssystem für ein Kraftfahrzeug, das einen zentralen Server aufweist, welcher Authentifizierungsinformationen verwaltet, sowie einen elektronischen Schlüssel wie er oben beschrieben wurde, der mit dem zentralen Server kommunikativ verbunden ist.

Das Authentifizierungssystem kann ferner ein Kraftfahrzeug aufweisen, wobei das Kraftfahrzeug über eine Mobilfunk-Verbindungseinheit verfügt, die es dem Kraftfahrzeug ermöglicht, einen Kommunikationsweg zu dem Server aufzubauen. Auf diese Weise kann das Kraftfahrzeug nicht nur über Kurzstreckenfunk mit dem elektronischen Schlüssel kommunizieren, sondern auf dem weiteren Kommunikationsweg auch mit einem Server, der Funktionen hinsichtlich der Zugriffsberechtigung eines elektronischen Schlüssels übernimmt.

Bei dem Authentifizierungssystem kann das Kraftfahrzeug dazu eingerichtet sein, über den Kommunikationsweg bei dem Server eine Rückversicherung bezüglich der Berechtigung des elektronischen Schlüssels einzuholen.

Der Server kann beispielsweise dazu eingerichtet sein, eine Rückversicherung zu erteilen (bzw. eine Berechtigung positiv zu Bescheiden), falls auf dem Server hinterlegte Gültigkeitsinformationen bezüglich dem elektronischen Schlüssel eine Gültigkeit des elektronischen Schlüssels anzeigen. Andererseits kann der Server ein Rückversicherungsgesuch des Kraftfahrzeugs negativ beantworten, falls auf dem Server hinterlegte Gültigkeitsinformationen bezüglich dem elektronischen Schlüssel eine Ungültigkeit des elektronischen Schlüssels anzeigen.

Der Server kann auch dazu eingerichtet sein, die Rückversicherung zu erteilen, falls auf dem Server hinterlegte, dem elektronischen Schlüssel zugeordnete Fahrzeuginformationen mit Fahrzeuginformationen übereinstimmen, die vom Kraftfahrzeug an der Server geschickt werden.

Die Erfindung betrifft auch ein Verfahren umfassend: Authentifizieren eines elektronischen Schlüssels hinsichtlich der Berechtigung zum Zugriff oder zur Nutzung eines Kraftfahrzeugs; und Senden von Informationen von dem Kraftfahrzeug zu einem Server zum Zwecke einer Rückversicherung hinsichtlich der Berechtigung des elektronischen Schlüssels zum Zugriff oder zur Nutzung des Kraftfahrzeugs. Eine Erteilung einer Berechtigung zum Zugriff oder zur Nutzung des Kraftfahrzeugs kann beispielsweise nur dann erteilt werden, wenn eine Rückversicherung beim Server zu einem positiven Ergebnis führt.

Ausführungsbeispiele der Erfindung werden nun beispielhaft und unter Bezugnahme auf die beigefügten Zeichnungen beschrieben, in denen:
Fig. 1 schematisch ein Ausführungsbeispiel für Komponenten eines erfindungsgemäßen elektronischen Schlüssels zeigt;
Fig. 2 ein Ausführungsbeispiel für eine Tabelle zeigt, die in einem Speicher eines elektronischen Schlüssels gespeichert ist, um die Kommunikation des elektrischen Schlüssels auf einen definierten Satz von Server und fernsteuerbare Komponenten einzuschränken;
Fig. 3 schematisch ein Ausführungsbeispiel eines erfindungsgemäßen elektronischen Schlüssels in Form einer Karte zeigt;
Fig. 4 schematisch ein Ausführungsbeispiel eines erfindungsgemäßen elektronischen Schlüssels in Form einer Smartwatch zeigt;
Fig. 5 ein Ausführungsbeispiel eines Authentifizierungssystems für ein Kraftfahrzeug zeigt;
Fig. 6 ein Ausführungsbeispiel für eine im Server gespeicherte Tabelle zeigt, welche eine Rechtevergabe festlegt;
Fig. 7 ein beispielhaftes Authentifizierungssystem zeigt, bei dem auch das Fahrzeug über eine Mobilfunk-Verbindungseinheit verfügt; und
Fig. 8 zeigt, wie ein weiterer Kommunikationsweg in einem Authentifizierungssystem zur Absicherung eines elektronischen Schlüssels verwendet werden kann.

Im Folgenden werden anhand dieser Figuren Ausführungsbeispiele der Erfindung näher erläutert.

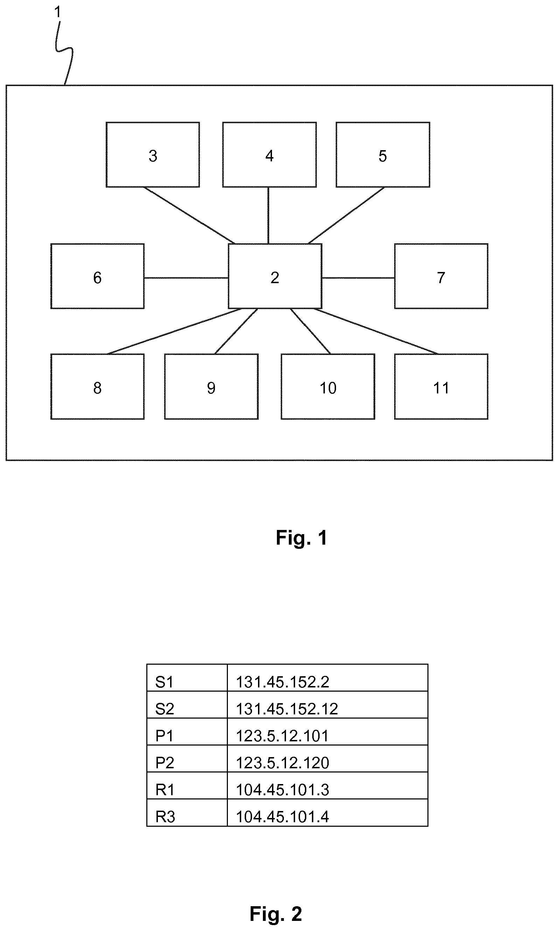

Fig. 1 zeigt schematisch ein Ausführungsbeispiel für Komponenten eines erfindungsgemäßen elektronischen Schlüssels. Der beispielhafte elektronische Schlüssel 1 weist einen Mikroprozessor 2 auf, der mit einer Mobilfunkeinheit 3 und einer Kurzstreckenfunkeinheit 4 verbunden ist. Der elektronische Schlüssel 1 weist ferner haptische Ein- und Ausgabemittel 5 wie beispielsweise Tasten oder einen Vibrationsmotor auf, die mit dem Mikroprozessor 2 in Verbindung stehen. Der elektronische Schlüssel 1 weist zudem ein Display 6, beispielsweise einen Touch-Screen auf, der mit dem Mikroprozessor 2 in Verbindung steht. Der elektronische Schlüssel 1 weist auch Sensoren 7 wie beispielsweise einen Beschleunigungssensor, ein Magnetometer und/oder einen Gyrosensor auf, die mit dem Mikroprozessor 2 in Verbindung stehen. Der elektronische Schlüssel 1 weist außerdem eine Einheit 8 zum kabellosen Laden, einen Speicher 9, ein GPS-Modul 10 auf, die mit dem Mikroprozessor 2 in Verbindung stehen.

Zusätzlich kann der elektronische Schlüssel 1 auch noch eine NFC-Einheit 11 aufweisen, welche für eine Nahfeldkommunikation (Near-Field-Communication) nach dem internationalen Übertragungsstandard zum kontaktlosen Austausch von Daten per Funktechnik über kurze Strecken von wenigen Zentimetern geeignet ist. Diese NFC-Einheit 11 kann beispielsweise für den elektronischen Zahlungsverkehr benutzt werden. Sofern ein zu entsperrendes Schloss einen NFC-Empfänger aufweist, kann die NFC-Einheit 11 auch die Rolle der Kurzstreckenfunkeinheit 4 übernehmen bzw. diese ersetzen.

Der elektronische Schlüssel 1 ermöglicht eine Verknüpfung von sicherer Hardware (dem intelligenten elektronischen Schlüssel 1) mit Diensten, die insbesondere im Fahrzeugbereich relevant sind. Ein wichtiger Aspekt des elektronischen Schlüssels 1 liegt in der Beschränkung der Funktionalität durch eine fehlende Nachrüstbarkeit von Applikationen und durch eine Limitierung der ansprechbaren Server im Internet.

Fig. 2 zeigt ein Ausführungsbeispiel für eine Tabelle, die in einem Speicher (9 in Fig. 1) eines elektronischen Schlüssels gespeichert ist, um die Kommunikation des elektrischen Schlüssels auf einen definierten Satz von Server und fernsteuerbare Komponenten einzuschränken. Die Tabelle enthält in der linken Spalte eine Bezeichnung für ein Zielgerät wie beispielsweise einen Server oder eine fernsteuerbare Komponente und in der rechten Spalte eine IP-Adresse für deren Adressierung im Internet. In den ersten beiden Zeilen der Tabelle ist hinterlegt, dass der elektronische Schlüssel mit einem Authentifizierungs-Server S1 und einem Authentifizierungs-Server S2 mit den IP-Adressen 131.45.152.2 bzw.131.45.152.12 kommunizieren darf, die von einem Fahrzeughersteller verwaltet werden. In den Zeilen drei und vier der Tabelle ist hinterlegt, dass der elektronische Schlüssel mit einem Server P1 und einem Server P2 mit den IP-Adressen 123.5.12.101 bzw. 123.5.12.120 eines mit dem Fahrzeughersteller kooperierenden Bezahldienst-Providers kommunizieren darf. In den Zeilen fünf und sechs der Tabelle ist hinterlegt, dass der elektronische Schlüssel mit einem fernsteuerbaren Gerät R1 und einem fernsteuerbaren Gerät R2 mit den IP-Adressen 104.45.101.3 bzw. 104.45.101.4 kommunizieren darf, die sich beispielsweise im Wohnhaus des Nutzers des elektronischen Schlüssels befinden. Die Tabelle der Fig. 2 ist so eingerichtet, dass sie nur von einem Server des Fahrzeugherstellers konfiguriert werden kann. Die fernsteuerbaren Geräte R1 und R2 und ihre IP-Adressen hat der Nutzer des elektronischen Schlüssels beispielsweise direkt am Server S1 bzw. S2 des Fahrzeugherstellers registriert, der diese dann über die Internet- bzw. Mobilfunkverbindung an den elektrischen Schlüssel gesendet hat und in die Tabelle eingetragen hat. Durch dieses geschlossene System ist eine hohe Sicherheit des elektronischen Schlüssels gewährleistet.

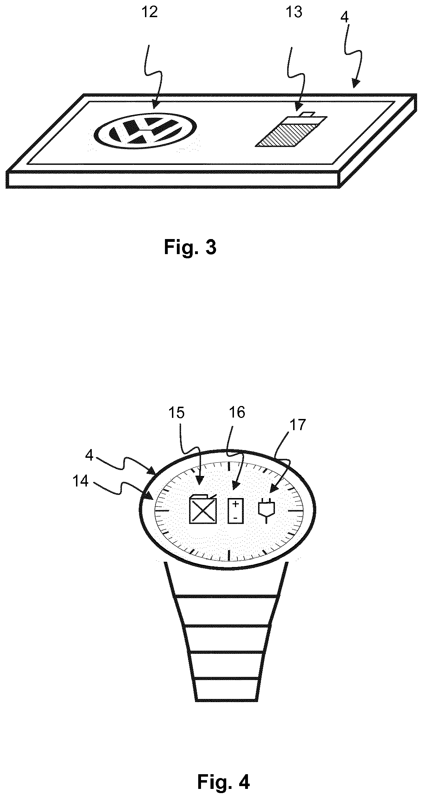

Fig. 3 zeigt schematisch ein Ausführungsbeispiel eines erfindungsgemäßen elektronischen Schlüssels in Form einer Karte. Der elektronische Schlüssel in Form einer Karte (beispielsweise der Form einer Scheckkarte) weist ein Display 4 auf, auf welchem dem Nutzer Informationen über das Fahrzeug angezeigt werden, dem der elektronische Schlüssel zugeordnet ist. Auf dem Display 4 wird beispielsweise ein Logo 12 des mit dem Schlüssel verbundenen Fahrzeugs angezeigt. Auf dem Display 4 wird ferner der Ladestatus 13 einer Hochvoltbatterie des mit dem Schlüssel verbundenen Fahrzeugs angezeigt. Damit wird das Gerät zum bidirektionalen Pager und deutlich interaktiver.

Um die permanente Verfügbarkeit eines Schlüssels zu erhalten, kann der zellulare Schlüssel auch in Form eines Wearables implementiert werden, beispielsweise in Form einer Smartwatch, einer Brosche, oder dergleichen.

Fig. 4 zeigt schematisch ein Ausführungsbeispiel eines erfindungsgemäßen elektronischen Schlüssels in Form einer Smartwatch. Der elektronische Schlüssel in Form einer Smartwatch weist ein Display 4 auf, auf welchem dem Nutzer Informationen über das Fahrzeug angezeigt werden, dem der elektronische Schlüssel zugeordnet ist. Auf dem Display 4 wird beispielsweise die Füllmenge 15 eines Benzintanks und der Ladestatus 16 einer Hochvoltbatterie des mit dem Schlüssel verbundenen Fahrzeugs angezeigt. Ein weiteres Symbol 17 auf dem Display 4 des elektronischen Schlüssels informiert den Nutzer darüber, dass die Hochvoltbatterie des Fahrzeugs gerade aufgeladen wird. Auf dem Display 4 wird dem Nutzer mittels eines Ziffernblatts 14 ferner auch die aktuelle Uhrzeit angezeigt.

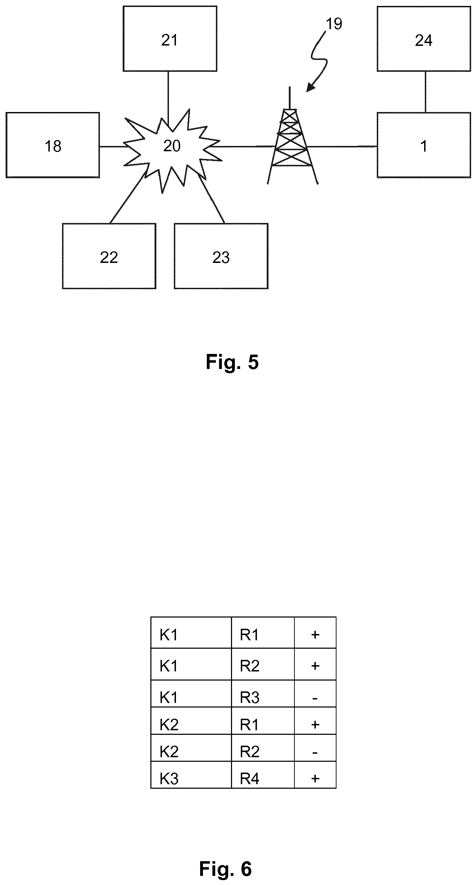

Fig. 5 zeigt ein Ausführungsbeispiel eines Authentifizierungssystems für ein Kraftfahrzeug. Das Authentifizierungssystem weist einen zentralen Server 18 auf, welcher Authentifizierungsinformationen verwaltet, sowie einen elektronischen Schlüssel 1, der mit dem zentralen Server 18 über ein Mobilfunknetz 19 und das Internet 20 verbunden ist. Der elektronische Schlüssel 1 kommuniziert über Kurzstreckenfunk mit einem Kraftfahrzeug 24. So kann der elektronische Schlüssel beispielsweise den Zugang zu dem Kraftfahrzeug 24 ermöglichen. Über diese Datenverbindung kann der elektronische Schlüssel beispielsweise Authentifizierungsinformationen wie Zugangscodes und dergleichen mit dem Server austauschen. Mit dem Server 18 ist ferner ein Computerterminal 21 verbunden, über das ein Nutzer Authentifizierungsinformationen auf dem Server 18 konfigurieren kann. Beispielsweise kann der Benutzer einem im Server 18 registrierten elektronischen Schlüssel Zugangsrechte für ein im Server 18 registriertes Fahrzeug erteilen oder löschen. Ein intelligenter elektronischer Schlüssel 1 mit Mobilfunk-Fähigkeit kann in solch einem Authentifizierungssystem flexibel von zentraler Stelle umprogrammiert werden und damit zeitvariante Zugriffsrechte erhalten. Schlüsselkontingente können insbesondere in größeren Organisationen mittels Sever 18 geleast und verwaltet werden.

Das beispielhafte Authentifizierungssystem der Fig. 4 weist ferner einen Bezahldienst-Provider 22 und eine Steuerung 23 für eine Garagentür auf. Der elektronische Schlüssel 1 wird durch den Mobilfunkkanal so zum Bezahlmedium, das in Echtzeit mit dem Provider 22 des Bezahldienstes kommunizieren kann. Der zellulare Schlüssel wird zur Fernbedienung für Geräte, die nicht lokal vorliegen (z.B. die Steuerung 23 für eine Garagentür) und kann durch das eingebaute Display den Status der Objekte verfolgen.

Fig. 6 zeigt ein Ausführungsbeispiel für eine im Server gespeicherte Tabelle, welche eine Rechtevergabe festlegt. Die Tabelle ist beispielsweise im Server 18 des Authentifizierungssystems der Fig. 4 abgelegt um beispielhafte elektronische Schlüssel mit den Bezeichnungen K1, K2 und K3 und deren Zugriff auf Ressourcen mit den Bezeichnungen R1, R2, R3 und R4 zu verwalten. Die linke Spalte nennt die Bezeichnung eines elektronischen Schlüssel, die mittlere Spalte die Bezeichnung einer Ressource und die rechte Spalte das momentane Zugriffsrecht. "+" steht für ein erteiltes Zugriffsrecht, "-" steht für ein zumindest temporär entzogenes Zugriffsrecht. Gemäß der Tabelle ist der elektronische Schlüssel K1 mit den Ressourcen R1, R2 und R3 verknüpft. Der elektronische Schlüssel K1 darf gemäß der ersten drei Zeilen der Tabelle auf die Ressourcen R1 und R2 zugreifen, nicht jedoch auf die Ressource R3. Der elektronische Schlüssel K2 ist mit den Ressourcen R1 und R2 verknüpft. Der elektronische Schlüssel K2 darf gemäß der vierten bzw. fünften Zeile der Tabelle auf die Ressource R1 zugreifen, nicht jedoch auf die Ressource R2. Der elektronische Schlüssel K3 ist mit der Ressource R4 verknüpft. Der elektronische Schlüssel K3 darf gemäß der letzten Zeile der Tabelle auf die Ressource R4 zugreifen.

Im Folgenden werden nun beispielhafte Verwendungsmöglichkeiten eines erfindungsgemäßen elektronischen Schlüssels bzw. Authentifizierungssystems genauer beschrieben:

### Zugangskontrolle

Ein erfindungsgemäßer intelligenter elektronischer Schlüssel mit Mobilfunk-Fähigkeit ermöglicht den Zugang zu einer Einrichtung (Fahrzeug, Raum, Funktion eines Geräts), indem er über eine verschlüsselte Verbindung lokal (z.B. über Bluetooth 4.0 Low Energy) oder über eine Mobilfunk-Verbindung kommuniziert. Die Zugangsrechte werden entweder im Netzwerk von einem Server überprüft oder direkt an der Zieleinrichtung, die den Zugang erlaubt (z.B. zu einem Fahrzeug), indem sie den Schlüssel mit einer Positivliste für zugelassene Schlüssel vergleicht.

Im Fall der Überprüfung der Zugriffsrechte mittels einer Mobilfunk-Verbindung und einem Server kann die Zieleinrichtung, z.B. ein Fahrzeug, ebenfalls über eine Mobilfunk-Verbindungseinheit verfügt. In einem Fahrzeug ist das üblicherweise das bordeigene Kommunikationssystem. Dies ermöglicht es, dass einen Kommunikationsweg zwischen Zieleinrichtung und Server aufzubauen, über den weitere Sicherheitsmaßnahmen vorgenommen werden können. So kann sich beispielsweise die Zieleinrichtung, z.B. ein Fahrzeug, auf diesem Kommunikationsweg Rückversichern, dass der elektronische Schlüssel tatsächlich dazu autorisiert ist, den Zugang, z.B. zu dem Fahrzeug, zu ermöglichen.

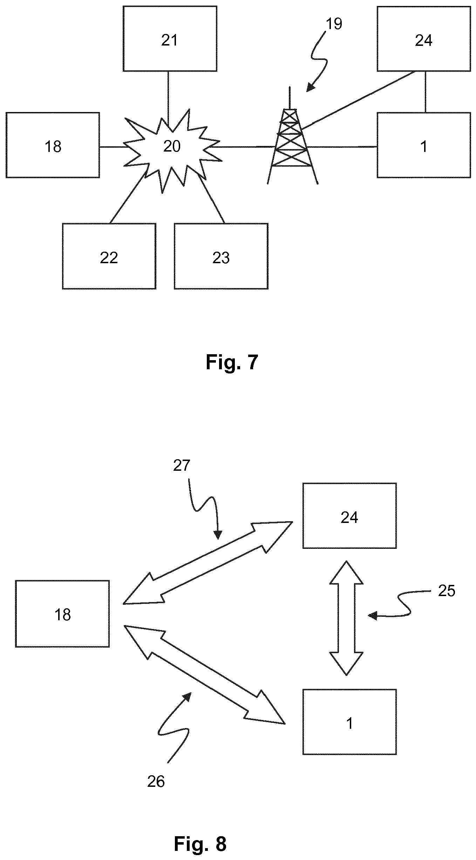

Ein Ausführungsbeispiel für ein System zur Absicherung des elektronischen Schlüssels mit einem weiteren Kommunikationsweg ist in den Fig. 7 und 8 gezeigt.

Fig. 7 zeigt ein Authentifizierungssystem, das im Wesentlichen dem System der Fig. 5 entspricht, mit der Ergänzung, dass auch das Fahrzeug 24 über eine Mobilfunk-Verbindungseinheit verfügt, so dass das Fahrzeug 24 über ein Mobilfunknetz 19 und ggf. das Internet 20 eine Kommunikationsverbindung mit einem Server 18 aufbauen kann.

Fig. 8 zeigt, wie solch ein weiterer Kommunikationsweg in einem Authentifizierungssystem zur Absicherung eines elektronischen Schlüssels verwendet werden kann. Ein elektronischer Schlüssel 1 kann über Kurzstreckenfunk 25 mit einem Fahrzeug 24 kommunizieren. Auf diese Weise kann das Fahrzeug 24 den Schlüssel 1 mit einer Positivliste für zugelassene Schlüssel vergleichen, und dem Schlüssel 1 bei Übereinstimmung des Schlüssels mit einem Eintrag der Positivliste Zugang bzw. Zugriff gewähren. Das Fahrzeug 24 verfügt ebenfalls über eine Mobilfunk-Verbindungseinheit (z.B. das bordeigene Kommunikationssystem). Über diese Mobilfunk-Verbindungseinheit kann das Fahrzeug 24 einen Kommunikationsweg 27 zu einem Server 18 aufbauen, um sich dort z.B. eine Rückversicherung bezüglich der Autorisierung des elektronischen Schlüssels zu holen. Hierzu kann das Fahrzeug über den Kommunikationsweg 27 beispielsweise Informationen zur Identifikation des elektronischen Schlüssels 1 oder andere Informationen zum Server 18 senden. Das Fahrzeug 24 kann so einem elektronischen Schlüssel beispielsweise nur dann Zugriff gewähren, falls auch eine Rückversicherung beim Server 18 über den Kommunikationsweg 27 zu einem positiven Ergebnis führt. In Fig. 8 ist auch ein Kommunikationsweg 26 zwischen dem elektronischen Schlüssel 1 und dem Sever 18 gezeigt. Dieser Kommunikationsweg 26 kann, wie oben beschrieben, dazu genutzt werden, vom Server 18 Authentifizierungsinformationen auf den elektronischen Schlüssel 1 zu übertragen und in einer Speichereinheit des elektronischen Schlüssels 1 abzuspeichern, und/oder in der Speichereinheit des elektronischen Schlüssels abgespeicherte Authentifizierungsinformationen auf Grundlage von vom zentralen Server 18 auf den elektronischen Schlüssel 1 übertragen Informationen zu ändern oder zu löschen.

Eine Rückversicherung des Fahrzeugs 24 beim Server 18 über den Kommunikationsweg 27 kann beispielsweise so ausgestaltet sein, dass im Server 18 weitere Informationen bezüglich der Autorisierung des elektronischen Schlüssels 1 hinterlegt sind. So können beispielsweise im Sever 18 für einen elektronischen Schlüssel 1 Gültigkeitsinformationen abgelegt werden. Solche Gültigkeitsinformationen können z.B. anzeigen, dass der elektronische Schlüssel 1 nicht gültig ist. So kann das Fahrzeug 24 einem elektronischen Schlüssel 1 Zugang/Zugriff selbst dann verwehren, wenn die Authentifizierungsinformationen des elektronischen Schlüssel 1 generell mit einer im Fahrzeug 24 hinterlegten Positivliste übereinstimmen. Dies ist beispielsweise dann von Vorteil, wenn dem elektronischen Schlüssel 1 die Zugriffsberechtigung für das Fahrzeug 24 entzogen werden sollen, eine Kommunikationsverbindung zwischen Server 18 und elektronischen Schlüssel 1 über den Kommunikationsweg 26 aber aus technischen Gründen (z.B. wegen Verbindungsstörungen) zeitweise nicht möglich ist. In solch einem Fall kann der elektronische Schlüssel 1 im Server 18 als ungültig erklärt werden. Eine Rückversicherung des Fahrzeugs 1 beim Server 18 über den Kommunikationsweg 27 führt in diesem Fall zu einem negativen Ergebnis und dem elektronischen Schlüssel 1 wird der Zugang/Zugriff zum Fahrzeug 24 verwehrt, obgleich der elektronische Schlüssel 1 in einer Positivliste des Fahrzeug 24

Alternativ oder zusätzlich kann über den Kommunikationsweg 27 auch eine im Fahrzeug 24 abgelegt Positivliste verwaltet werden. So kann der Server 18 beispielsweise Einträge in die Positivliste hinzufügen, aus dieser löschen, oder in dieser ändern. Über die Mobilfunk-Verbindungseinheit kann das Fahrzeug 24 nicht nur ein Kommunikationsweg zu einem Server 18 aufbauen, sondern auch zu einem Computerterminal (21 in Fig. 7), oder zu einem Bezahldienst-Provider (22 in Fig. 7). So könnte eine im Fahrzeug 24 hinterlegte Positivliste auch direkt von einem Computerterminal aus verwaltet werden.

Eine weitere Art der Rückversicherung könnte ferner so ausgestaltet sein, dass das Fahrzeug 24 über den Kommunikationsweg 27 Informationen zum Server 18 sendet, die das Fahrzeug 24 selbst kennzeichnen, z.B. eine Fahrzeugidentifikationsnummer, eine Fahrzeugtypeninformation, oder dergleichen. Im Server 18 können einem elektronischen Schlüssel vorab entsprechende Informationen zugeordnet werden. Die vom Fahrzeug 1 über den Kommunikationsweg 27 empfangen Informationen können nun vom Server 18 mit den dem elektronischen Schlüssel vorab zugeordnet Informationen verglichen werden und eine positive Rückversicherung nur geben werden, falls diese Informationen übereinstimmen.

Der Schlüssel kann noch vielfältiger genutzt werden, indem Sensoren wie ein Beschleunigungssensor/ Magnetometer/Gyrosensor integriert werden. Um eine Tür zu öffnen, kann man mit dem Schlüssel eine Geste vollführen, anstatt einen Code einzugeben oder einen Knopf zu drücken. Da vielerlei unterschiedliche Gesten vorstellbar sind, können auf dem Schlüssel neue Funktionen konfiguriert werden. Verschiedene Gesten können dann unterschiedlichen Funktionen zugeordnet werden.

### Personalisierung und die Rolle des Nutzers

Normalerweise sind elektronische Schlüssel einmalig aber nicht auf ihren Nutzer zugeschnitten. Ein intelligenter elektronischer Schlüssel mit Mobilfunk-Fähigkeit kann personalisiert werden, indem ein Nutzerprofil und damit verknüpfte Zugangsrechte über das Netzwerk auf dem Schlüssel gespeichert werden. Personalisierung kann beispielsweise beim Flottenmanagement relevant sein, wenn verschiedene Nutzer unterschiedliche Zugangsrechte haben, um auf bestimmte Fahrzeuge oder Serviceoptionen zugreifen zu können.

Eine andere Verwendungsmöglichkeit ist Car-Sharing: Mögliche Nutzer erhalten ihren personalisierten intelligenten elektronischen Schlüssel mit Mobilfunk-Fähigkeit. Sobald der Nutzer ein Fahrzeug für eine bestimmte Zeitspanne gebucht hat, werden seine Zugangsrechte auf den Schlüssel übertragen. Der Zugang endet, wenn die Zugriffsrechte ablaufen. Dieses Merkmal erlaubt einen effizienten Einsatz im Flottenmanagement. Für jeden Nutzer eines Fahrzeugs können andere Zugangsrechte und Optionen eingerichtet werden.

Häufig kommt es auch vor, dass Fahrzeughalter ihr Fahrzeug gerne einem Freund, Verwandten oder Kollegen leihen würden, doch dass die Versicherung oder Fahrzeugnutzungsbestimmungen der Firma dies verbieten, da die Verantwortung für die Unversehrtheit des Fahrzeugs an die im Vertrag erwähnten Nutzer gebunden ist. Ein neues Versicherungskonzept könnte eine zeitlich begrenzte Versicherung für Leihwagen oder an Freunde und Verwandte verliehene Fahrzeugen umfassen. Gemäß diesem Anwendungsbeispiel wird die Fahrzeugnutzung an den Besitzer des neuen elektronischen Schlüssels mit Mobilfunk-Fähigkeit gebunden und ein entsprechendes Protokoll kann auf dem Schlüssel gespeichert werden, das die Nutzung des Fahrers für die Versicherung dokumentiert.

### Zahlungsvorrichtung

Wenn man den Schlüssel immer bei sich hat, da er Zugang zum Fahrzeug, den Büroräumen oder dem eigenen Zuhause ermöglicht, kann er praktischerweise zugleich als elektronisches Zahlungsmittel verwendet werden. Ein Bezahlvorgang könnte vom Nutzer initiiert werden, indem er eine Nachricht an einen Bezahldienst schickt und die Transaktion zur Sicherheit auf dem Display des elektronischen Schlüssels mit Mobilfunk-Fähigkeit bestätigt. Der Schlüssel wird so auch zu einer Zugangsvorrichtung zu Finanztransaktionen.

Für eine Car-Sharing-Firma wäre es möglich, den Schlüssel so zu programmieren, dass der Schlüssel zu bestimmten Zeiten oder in bestimmten Zeitspannen verschiedene Fahrzeugmodelle öffnet. Die Bezahlung könnte dann über die Mobilfunk-Verbindung erfolgen (Prepaid-System).

Die Zahl der kommerziellen (nicht kostenlosen) Fahrzeugservices wächst. Statt den Besitzer der im Fahrzeug eingebauten Kommunikationseinheit mit allen Servicekosten zu belasten, könnten die Kosten auch anderen Fahrzeuginsassen, wenn sie die aktiven Nutzer eines Services sind, mittels ihrer jeweiligen intelligenten elektronischen Schlüssel mit Mobilfunk-Fähigkeit zugeordnet werden. Beispiele wären etwa Straßenzölle oder Parkgebühren, Multimedia-Streaming-Services oder andere kommerzielle Mobility-Services.

### Fernüberwachung

Dank der kabellosen Verbindung und dem Display auf dem elektronischen Schlüssel mit Mobilfunk-Fähigkeit kann dieser auch verwendet werden, um den Status verschiedener Vorrichtungen zu kontrollieren: So könnte etwa der Ladezustand des elektrischen Autos in der Parkgarage überprüft werden, oder ob noch ein Fenster offen ist, der aktuelle Luftdruck in den Reifen oder wo das Auto in einer fremden Stadt geparkt ist. Die Information wird jeweils auf dem Display des elektronischen Schlüssels mit Mobilfunk-Fähigkeit angezeigt.

### Fernsteuerung

Da die Mobilfunk-Verbindung in beide Richtungen funktioniert, kann der Schlüssel auch dazu verwendet werden, Befehle an bestimmte Einrichtungen aus der Ferne zu senden. So könnte man bspw. bei Hitze die Klimaanlage einschalten, das Licht anschalten, um den Nutzer im Dunkeln zu seinem Fahrzeug zu leiten oder bei Kälte den Fahrzeuginnenraum vorheizen. Wenn das Fahrzeug in der Lage ist autonom zu fahren, könnte man es über den Schlüssel zu dessen GPS-Position rufen.

### Speicherung von Fahrzeugdaten und einem persönlichen Profil

Der Schlüssel kann auch als eine über das Netzwerk gesteuerte Speichervorrichtung verwendet werden, z.B. für Fahrzeugdaten und ein persönliches Profil. Während der Nutzer im Fahrzeug ist, könnte der Schlüssel Fahrzeugdiagnosedaten und Routendetails (Fahrtenbuch) aktualisieren. Dies erfolgt über die lokale kabellose Verbindung (z.B. Bluetooth). Der Nutzer des Schlüssels kann sein persönliches Profil mit Einstellungen für das Fahrzeug importieren und auch persönliche Daten wie etwa Kontaktinformationen, Notfallnummern und anderes.

Da der Schlüssel eine Mobilfunkeinheit umfasst, kann er als ein über das Netzwerk gesteuerter Speicherknoten verstanden werden, der von überall auf der Welt zugänglich ist. So ist es möglich, dass ein autorisierter Nutzer Informationen auf dem Schlüssel speichert, die von irgendeinem via Internet verbundenen Gerät stammen. Dies erlaubt den einfachen Import von persönlichen Reisedaten wie etwa Reiseziele, Hoteladressen, Ausflugsziele, indem sie zuvor auf dem Schlüssel gespeichert werden. Vor allem in einem Kontext, in dem Fahrzeuge von verschiedenen Nutzern verwendet werden, bleiben solche Daten privat und sind nicht allen Nutzern zugänglich, wie etwa wenn sie direkt auf den Bordcomputer übertragen werden.

### Lokalisierung und Notrufe

Wenn der elektronische Schlüssel mit Mobilfunk-Fähigkeit über einen GPS-Empfänger verfügt, kann er seine Position zu einem Server übermitteln. Diese Eigenschaft erlaubt Notrufe, auch wenn der Nutzer sich nicht im Fahrzeug befindet. In älteren Fahrzeugen ohne eingebaute Bordkommunikation oder wenn der Nutzer ohne sein Fahrzeug verreist sind solche Notrufe ebenfalls möglich.

### Bezugszeichenliste

- 1: Elektronischer Schlüssel
- 2: Mikroprozessor
- 3: Ein- und Ausgabemittel
- 4: Display
- 5: Sensoren
- 6: Mobilfunkeinheit
- 7: Kurzstreckenfunkeinheit
- 8: Einheit zum kabellosen Laden
- 9: Speichereinheit
- 10: GPS-Modul
- 11: NFC-Einheit
- 12: Logo des mit dem Schlüssel verbundenen Fahrzeugs
- 13: Anzeige des Ladestatus einer Hochvoltbatterie
- 14: Ziffernblatt
- 15: Anzeige der Füllmenge eines Benzintanks
- 16: Anzeige des Ladestatus einer Hochvoltbatterie
- 17: Symbol, das das Aufladen der Hochvoltbatterie anzeigt
- 18: Server
- 19: Mobilfunknetz
- 20: Internet
- 21: Computerterminal
- 22: Bezahldienst-Provider
- 23: Steuerung für Garagentür
- 24: Kraftfahrzeug
- 25: Kommunikationsweg zwischen elektronischem Schlüssel und Fahrzeug
- 26: Kommunikationsweg zwischen elektronischem Schlüssel und Server
- 27: Kommunikationsweg zwischen Fahrzeug und Server

## Patentansprüche

1. Elektronischer Schlüssel für ein Kraftfahrzeug, umfassend
eine Mobilfunkeinheit (6), die es dem elektronischen Schlüssel ermöglicht, über ein Mobilfunknetz Authentifizierungsinformationen von einem zentralen Server (18) zu empfangen,
eine Verarbeitungseinheit (2), welche dazu eingerichtet ist, von dem zentralen Server empfangene Authentifizierungsinformationen zu verarbeiten,
eine Speichereinheit (9), die dazu eingerichtet ist, von dem zentralen Server empfangene Authentifizierungsinformationen zu speichern, sowie
eine Kurzstreckenfunkeinheit (7), die es dem elektronischen Schlüssel ermöglicht, Authentifizierungsinformationen an das Kraftfahrzeug (24) zu senden, um ein Schloss oder eine Funktion einer Vorrichtung zu entsperren, **dadurch gekennzeichnet, dass** die Mobilfunkeinheit (6) so eingerichtet ist, dass sie nur mit einem oder mehreren als vertrauenswürdig eingestuften Servern (20) kommunizieren kann.

2. Elektronischer Schlüssel nach Anspruch 1, wobei die Verarbeitungseinheit dazu eingerichtet ist, vom Server Authentifizierungsinformationen entgegenzunehmen und in der Speichereinheit (9) abzuspeichern, und/oder in der Speichereinheit (9) abgespeicherte Authentifizierungsinformationen auf Grundlage von vom zentralen Server empfangenen Informationen zu ändern oder zu löschen.

3. Elektronischer Schlüssel nach einem der vorstehenden Ansprüche, wobei die Verarbeitungseinheit (2) dazu eingerichtet ist, Informationen über die Mobilfunkeinheit (6) zu versenden, wobei die Informationen die Verwendung des elektronischen Schlüssels als Zahlungsgerät, als Pager, als universelle Fernsteuerung, als Überwachungsgerät, und/oder als Notrufgerät betreffen.

4. Elektronischer Schlüssel nach einem der vorstehenden Ansprüche, der eine Betriebssystem-Software aufweist, die geschlossen ist.

5. Elektronischer Schlüssel nach einem der vorstehenden Ansprüche, wobei die Speichereinheit (9) ferner zum Speichern von persönlichen Daten eingerichtet ist.

6. Elektronischer Schlüssel nach einem der vorstehenden Ansprüche, der den Form-Faktor eines Schlüssels aufweist.

7. Elektronischer Schlüssel nach einem der vorstehenden Ansprüche, der ferner einen oder mehrere Sensoren (5) wie einen Beschleunigungssensor, ein Magnetometer und/oder einen Gyrosensor aufweist, wobei die Verarbeitungseinheit ferner dazu eingerichtet ist, anhand erfasster Sensordaten eine Geste zu erkennen, welche zu der Entsperrung führt.

8. Authentifizierungssystem für ein Kraftfahrzeug, das einen zentralen Server (18) aufweist, welcher Authentifizierungsinformationen verwaltet, sowie einen elektronischen Schlüssel (1) nach einem der vorstehenden Ansprüche, der mit dem zentralen Server (18) kommunikativ verbunden ist.

9. Authentifizierungssystem nach Anspruch 8, das ferner ein Kraftfahrzeug (24) aufweist, wobei das Kraftfahrzeug (24) über eine Mobilfunk-Verbindungseinheit verfügt, die es dem Kraftfahrzeug (24) ermöglicht, einen Kommunikationsweg (27) zu dem Server (18) aufzubauen.

10. Authentifizierungssystem nach Anspruch 9, bei dem das Kraftfahrzeug (24) dazu eingerichtet ist, über den Kommunikationsweg (27) bei dem Server (18) eine Rückversicherung bezüglich der Berechtigung des elektronischen Schlüssels (1) einzuholen.

11. Authentifizierungssystem nach Anspruch 10, bei dem der Server (18) dazu eingerichtet ist, die Rückversicherung zu erteilen, falls auf dem Server (18) hinterlegte Gültigkeitsinformationen bezüglich dem elektronischen Schlüssel (1) eine Gültigkeit des elektronischen Schlüssels (1) anzeigen.

12. Authentifizierungssystem nach Anspruch 10, bei dem der Server (18) dazu eingerichtet ist, die Rückversicherung zu erteilen, falls auf dem Server (18) hinterlegte, dem elektronischen Schlüssel (1) zugeordnete Fahrzeuginformationen mit Fahrzeuginformationen übereinstimmen, die vom Kraftfahrzeug (24) an der Server geschickt werden.

13. Verfahren zum Entsperren eines Kraftfahrzeugs mit einem elektronischen Schlüssel umfassend:
Empfangen von Authentifizierungsinformationen von einem zentralen Server über ein Mobilfunknetz;
Verarbeiten von den von dem zentralen Server empfangene Authentifizierungsinformationen;
Speichern von den von dem zentralen Server empfangene Authentifizierungsinformationen; und
Senden von den verarbeiteten Authentifizierungsinformationen an das Kraftfahrzeug über Kurzstreckenfunk, um ein Schloss oder eine Funktion einer Vorrichtung zu entsperren; wobei der elektronische Schlüssel (1) nur mit einem oder mehreren als vertrauenswürdig eingestuften Servern (20) kommunizieren kann.

## Claims

1. An electronic key for a motor vehicle, comprising a mobile radio unit (6), which permits the electronic key to receive authentication information from a central server (18) via a mobile radio network,
a processing unit (2), which is configured to process authentication information received from the central server,
a memory unit (9), which is configured to store authentication information received from the central server, and
a short-distance radio unit (7), which permits the electronic key to transmit authentication information to the motor vehicle (24), in order to unlock a lock or a function of a device,
**characterized in that**
the mobile radio unit (6) is configured such that it can communicate only with one or a plurality of servers (20) classified as trusted.

2. The electronic key according to Claim 1 wherein the processing unit is configured to accept authentication information from the server and to store it in the memory unit (9), and/or to change or to delete authentication information stored in the memory unit (9) based upon information received from the central server.

3. The electronic key according to any one of the preceding claims, wherein the processing unit (2) is configured to transmit information via the mobile radio unit (6), wherein the information relates to the use of the electronic key as a payment device, as a pager, as a remote control, as a monitoring device, and/or as an emergency call device.

4. The electronic key according to any one of the preceding claims, which has an operating system software, which is closed.

5. The electronic key according to any one of the preceding claims wherein the memory unit (9) is also configured for storing personal data.

6. The electronic key according to any one of the preceding claims, which has the form factor of a key.

7. The electronic key according to any one of the preceding claims, which also has one or a plurality of sensors (5) such as an acceleration sensor, a magnetometer and/or a gyroscopic sensor, wherein the processing unit is also configured to recognize a gesture by means of acquired sensor data, which leads to the unlocking.

8. An authentication system for a motor vehicle, which has a central server (18), which manages authentication information, as well as an electronic key (1) according to anyone of the preceding claims, which is communicatively connected to the central server (18).

9. The authentication system according to Claim 8, which also has a motor vehicle (24), wherein the motor vehicle (24) has a mobile radio connection unit, which permits the motor vehicle (24) to establish a communication path (27) to the server (18).

10. The authentication system according to Claim 9, in which the motor vehicle (24) is configured to obtain a confirmation with respect to the authorization of the electronic key (1) via the communication path (27) to the server (18).

11. The authentication system according to Claim 10, in which the server (18) is configured to issue the confirmation, if validity information stored on the server (18) with respect to the electronic key (1) indicates a validity of the electronic key (1).

12. The authentication system according to Claim 10, in which the server (18) is configured to issue the confirmation, if vehicle information stored on the server (18), which is assigned to the electronic key (1), corresponds with vehicle information, which is sent by the motor vehicle (24) to the server.

13. A method for unlocking a motor vehicle with an electronic key comprising:
receiving authentication information from a central server via a mobile radio network;
processing the authentication information received from the central server;
storing the authentication information received from the central server; and
sending the processed authentication information to the motor vehicle via short-distance radio, in order to unlock a lock or a function of a device;
wherein the electronic key (1) can communicate only with one or a plurality of servers (20) classified as trusted.

## Revendications

1. Clé électronique pour un véhicule automobile, comprenant :
une unité de téléphonie mobile (6) qui permet à la clé électronique de recevoir, par l'intermédiaire d'un réseau de téléphonie mobile, des informations d'authentification provenant d'un serveur central (18),
une unité de traitement (2) qui est conçue pour traiter les informations d'authentification reçues en provenance du serveur central,
une unité de mémoire (9) qui est conçu pour enregistrer les informations d'authentification reçues en provenance du serveur centrale, ainsi que
une unité de radio à courte portée (7) qui permet à la clé électronique d'envoyer des informations d'authentification au véhicule (24), afin de déverrouiller une serrure ou une fonction d'un dispositif,
**caractérisée en ce que**
l'unité de téléphonie mobile (6) est conçue de façon à pouvoir communiquer uniquement avec un ou plusieurs serveurs (20) considérés comme fiables.

2. Clé électronique selon la revendication 1, l'unité de traitement étant conçue pour recevoir du serveur des informations d'authentification et de les enregistrer dans l'unité de mémoire (9) et/ou pour modifier ou supprimer les informations d'authentification enregistrées dans l'unité de mémoire (9) sur la base des informations reçues en provenance du serveur central.

3. Clé électronique selon l'une des revendications précédentes, l'unité de traitement (2) étant conçue pour envoyer des informations par l'intermédiaire de l'unité de téléphonie mobile (6), les informations concernant l'utilisation de la clé électronique en tant qu'appareil de comptage, en tant que pager, télécommande universelle, appareil de surveillance et/ou appareil d'appel d'urgence.

4. Clé électronique selon l'une des revendications précédentes, qui comprend un logiciel de système d'exploitation qui est fermé.

5. Clé électronique selon l'une des revendications précédentes, l'unité de mémoire (9) étant en outre conçue pour l'enregistrement de données personnelles.

6. Clé électronique selon l'une des revendications précédentes, qui comprend le facteur de forme d'une clé.

7. Clé électronique selon l'une des revendications précédentes, qui comprend en outre un ou plusieurs capteurs (5) comme un capteur d'accélération, un magnétomètre et/ou un gyroscope, l'unité de traitement étant en outre conçue pour détecter, à l'aide des données de capteurs saisies, un geste qui provoque le déverrou illage.

8. Système d'authentification pour un véhicule automobile, qui comprend un serveur central (18) qui gère des informations d'authentification ainsi qu'une clé électronique (1) selon l'une des revendications précédentes, qui est reliée de manière communicative avec le serveur central (18).

9. Système d'authentification selon la revendication 8, qui comprend en outre un véhicule automobile (24), le véhicule automobile (24) disposant d'une unité de liaison par téléphonie mobile qui permet au véhicule automobile (24) d'établir un canal de communication (27) avec le serveur (18).

10. Système d'authentification selon la revendication 9, dans lequel le véhicule automobile (24) est conçu pour obtenir, par l'intermédiaire du canal de communication (27), auprès du serveur (18), une réassurance concernant l'autorisation de la clé électronique (1).

11. Système d'authentification selon la revendication 10, dans lequel le serveur (18) est conçu pour accorder la réassurance si les informations de validité enregistrées dans le serveur (18) concernant la clé électronique (1) indiquent une validité de la clé électronique (1).

12. Système d'authentification selon la revendication 10, dans lequel le serveur (18) est conçu pour accorder la réassurance si les informations du véhicule correspondant à la clé électronique (1), enregistrées sur le serveur (18) coïncident avec les informations du véhicule qui sont envoyées par le véhicule automobile (24) au serveur.

13. Procédé de déverrouillage d'un véhicule automobile avec une clé électronique, comprenant :
la réception d'informations d'authentification en provenance d'un serveur central par l'intermédiaire d'un réseau de téléphonie mobile ;
le traitement des informations d'authentification reçues par le serveur central ;
l'enregistrement des informations d'authentification reçues par le serveur central ; et
l'envoi des informations d'authentification traitées au véhicule automobile par radio à courte portée afin de déverrouiller une serrure ou une fonction d'un dispositif ;
la clé électronique (1) ne pouvant communiquer qu'avec un ou plusieurs serveurs (20) considérés comme fiables.
